# EUROPÄISCHE PATENTSCHRIFT

(11) **EP 0 832 040 B1**
(45) Veröffentlichungstag und Bekanntmachung des Hinweises auf die Patenterteilung: **16.08.2001**
(21) Anmeldenummer: 96918646.9
(22) Anmeldetag: 30.05.1996
(51) Int. Cl.: C01G 41/00, C01G 39/00, C01G 31/00, C01G 37/00, C01G 47/00, C22B 3/00

(54) **VERFAHREN ZUR HERSTELLUNG REINER AMMONIUMMETALLATE**
PROCESS FOR PRODUCING PURE AMMONIUM METALLATES
PROCEDE DE PRODUCTION DE METALLATES D'AMMONIUM PURS

(30) Priorität: 12.06.1995 DE 19521332
(43) Veröffentlichungstag der Anmeldung: 01.04.1998
(73) Patentinhaber: H.C. Starck GmbH & Co. KG, 38642 Goslar (DE)
(72) Erfinder: GUTKNECHT, Wilfried, D-38642 Goslar (DE); MATHY, Wolfgang, D-38685 Langelsheim (DE)
(74) Vertreter: Drope, Rüdiger, Dr.
(86) Internationale Anmeldenummer: EP9602318
(87) Internationale Veröffentlichungsnummer: WO9641767

(56) Entgegenhaltungen:
- EP-A- 0 308 521
- BE-A- 661 678
- DATABASE WPI Section Ch, Week 8719 Derwent Publications Ltd., London, GB; Class A91, AN 87-133956 XP002013301 & SU,A,1 032 810 (KHABIROV V V) , 30.September 1986
- CHEMICAL ABSTRACTS + INDEXES, Bd. 110, Nr. 8, 20.Februar 1989, Seite 175 XP000015990 DENG S ET AL: "PREPARATION OF AMMONIUM PARATUNGSTATE WITH HIGH-PURITY USING TWO-STEP ION EXCHANGE METHOD"

## Beschreibung

Die vorliegende Erfindung betrifft ein Verfahren zur Herstellung reiner Ammoniummetallate der Metalle W, Mo, V, Cr und Re, wobei alkalische Metallsalzlösungen durch Umsetzung mit CO₂ auf einen pH-Wert im Bereich von 5 bis 9 eingestellt, diese Metallsalzlösungen über einen in der Carbonat-Form vorliegenden Anionentauscher gegeben werden, wobei sich neben der Alkalicarbonat-Lösung der Ionentauscher in der Metallat-Form bildet, dann der Ionentauscher alkalifrei gewaschen und anschließend mittels wäßrigen Ammoniaks unter Bildung von Ammonium-Metallatlösungen und dem in der OH-Form vorliegenden Anionentauscher eluiert wird, wobei der Anionentauscher mittels CO₂-Behandlung in die Carbonat-Form überführt und rückgeführt wird.

Zur Herstellung reiner Ammoniummetallate, insbesondere der Refraktärmetalle W, Mo und V als Vorprodukte für die Metallgewinnung, werden die Rohstoffe allgemein mit NaOH- oder Na₂CO₃-Lösungen gelaugt. Dabei wird ein Überschuß an Alkalien eingesetzt, um möglichst hohe Ausbeuten an Wertmetall zu erzielen. Bei der nachfolgenden Weiterverarbeitung muß der pH-Wert dieser Lösungen abgesenkt werden. Da dies im allgemeinen unter Verwendung von Mineralsäuren geschieht, fallen zwangsläufig Neutralsalze an, die entsorgt werden müssen.

Dem Aufschluß und der Reinigung der so gewonnenen Alkali-Metallatlösungen schließt sich dann deren Umwandlung in die Ammoniummetallate an.

Dies geschieht vorwiegend über Solventextraktionsverfahren (Ullmanns Encyclopädie der technischen Chemie, 4. Auflage, Bd. 24, 1983, Seite 466) oder die Gewinnung über feste Ionenaustauscher (Uranium Mining and Metallurgy Vol. 10 (3), August 1991).

Auch bei diesen beiden Verfahren wird die pH-Absenkung durch den Zusatz von Mineralsäuren vorgenommen, wodurch erhebliche Mengen zu entsorgender Neutralsalze anfallen müssen.

Ein verbessertes Solventextraktionsverfahren wird in den SU-A 1 792 993 und SU-A 1 792 994 (Derwent 94-133033/16 und 94-133084/16) offenbart. Hiernach wird die Ansäuerung durch CO₂ durchgeführt, wobei Na₂CO₃ entsteht, welches in den Prozeß zurückgeführt werden kann. Bei dem beschriebenen Verfahren wird das Metallatanion in eine organische Phase überführt und anschließend mit NH₃-Lösung nur teilweise wieder reextrahiert. Bis zu etwa 50 % der stöchiometrischen Menge des Extraktionsmittels bleiben dabei jedoch durch das Metallatanion blockiert.

Aufgabe der vorliegenden Erfindung ist es, ein Verfahren bereitzustellen, das die Umweltbelastung durch die Neutralsalze und die Nachteile der unvollständigen Ausnutzung des Extraktionsmittels vermeidet.

Gelöst wird diese Aufgabe durch ein Verfahren zur Herstellung reiner Ammonium-Metallate der Metalle W, Mo, V, Cr und Re, wobei alkalische Metallsalzlösungen durch Umsetzung mit CO₂ auf einen pH-Wert im Bereich von 5 bis 9 eingestellt, diese Metallsalzlösungen über einen in der Carbonat-Form vorliegenden Anionentauscher gegeben werden, wobei sich neben der Alkalicarbonat-Lösung der Ionentauscher in der Metallat-Form bildet, dann der Ionentauscher alkalifrei gewaschen und anschließend mittels wäßrigen Ammoniaks unter Bildung von Ammoniummetallatlösungen und dem in der OH-Form vorliegenden Anionentauscher eluiert wird, wobei der Anionentauscher mittels CO₂-Behandlung in die Carbonat-Form überführt und rückgeführt wird, wobei als Anionentauscher ein fester Anionentauscher eingesetzt wird.

Bevorzugt wird als fester Anionentauscher ein mittelbasischer Ionenaustauscher eingesetzt. Hierbei handelt es sich um solche, die tertiäre und quarternäre Ammoniumgruppen als aktive Komponenten enthalten. Bessere Ergebnisse werden mit schwachbasischen Ionenaustauschern erreicht, also solchen, die vorwiegend tertiäre Ammoniumgruppen als aktive Komponenten aufweisen. Diese zeigen eine fast vollständige Eluierbarkeit mit wäßrigem NH₃.

Beste Ergebnisse lassen sich erzielen, wenn die Umsetzung der alkalischen Metallsalzlösungen mit CO₂ bei Drücken von Normaldruck bis 50 bar, bevorzugt Normaldruck bis 10 bar, durchgeführt wird.

Die Beladung des Austauschers mit CO₂ kann auch vorteilhaft mittels CO₂-Wasser bei Drücken von 1 bis 10 bar durchgeführt werden. Somit kann man insbesondere Festbett-Austauscher in einfacher Weise in die Carbonat-Form überführen.

Die Eluierung des Anionentauschers mittels wäßrigen Ammoniaks wird vorzugsweise mit einer Konzentration von 5 bis 20 Gew.-% NH₃ zu einem Austauschgrad von mindestens 90 % durchgeführt.

Eine besonders vorteilhafte Variante des erfindungsgemäßen Verfahrens besteht darin, daß das Alkalicarbonat enthaltende Raffinat aufkonzentriert und rückgeführt und beim Aufschluß von Metallrohstoffen zur Herstellung der alkalischen Metallsalzlösungen eingesetzt wird.

Nachfolgend wird die Verfahrensführung am Beispiel des Wolframs erläutert, ohne daß hierin eine Einschränkung zu sehen ist.

Die natriumalkalische Aufschlußlösung wird mit CO₂ bis zu einem pH-Wert von 8,5 begast. Bei diesem pH-Wert werden P, As und Si-Verunreinigungen durch bekannte Fällverfahren abgetrennt. Nach der anschließenden Filtration wird die Lösung auf 20 bis 50 g WO₃/l verdünnt und mit CO₂ auf einen pH-Wert von etwa 7 eingestellt.

Die aus mehreren Säulen bestehende Austauscheranlage wird mit einem mittel- bis schwach-basischen Anionentauscher gefüllt. Das Tauscherharz wird durch eine wäßrige Aufschlämmung mit CO₂, vorzugsweise unter Druck, in die CO₃²⁻-Form überführt. Die eingestellte Wolframat-Lösung passiert nacheinander die Austauschersäulen. Der pH-Wert wird zwischen den einzelnen Säulen durch Zugabe von CO₂ nachgeregelt. Die letzte Säule verläßt eine Lösung mit 15 g Na₂CO₃/l. Wenn die jeweils erste Säule mit WO₄²⁻- beladen ist, wird die Säule mit H₂O natriumfrei gewaschen, bei Temperaturen von 50 bis 80°C mit verdünnter NH₃-Lösung eluiert, nochmals gewaschen, mit CO₂ neu formiert und an das Ende der Anlage geschaltet. Das Eluat kann nach bekannten Verfahren aufgearbeitet werden.

Das erfindungsgemäße Verfahren ist verglichen mit der Solventextraktion apparativ einfacher durchzuführen und zu steuern.

Nachfolgend wird die Erfindung beispielhaft erläutert, ohne daß hierin eine Einschränkung zu sehen ist.

### Beispiel 1 (Vergleichsbeispiel nach SU-A 1792993/4)

In einer Labor-SX-Anlage (Mixer-Settler) wurden Versuche zur kontinuierlichen Extraktion von W unter Verwendung von CO₂ zur Einstellung der erforderlichen pH-Werte durchgeführt.

Die eingesetzte Na₂WO₄-Lösung wurde auf 70 g/l W verdünnt und mit CO₂ bis zur Einstellung eines pH-Wertes von 7,0 begast. Die organische Phase (15 % Adogen 464, 8 % Isodecanol, Rest Escaid 120), die im Kreislauf gefahren wurde, wurde im Vorratsgefäß ebenfalls mit CO₂ begast.

Bei einer Beladung der organischen Phase (OP) von 35 bis 40 g/l W ließen sich mit NH₃-Lösung ca. 55 % der W-Beladung strippen. Die restlichen 45 % verblieben auf der OP im Kreislauf oder konnten nur mit NaOH als Na₂WO₄-Strip gewonnen werden.

### Beispiel 2 (erfindungsgemäß)

Zur Ermittlung des optimalen Anionentauschers zur Ammoniumparawolframat (APW)-Gewinnung wurden verschiedene schwach-, mittel- und stark-basische Anionentauscher getestet. Alle Austauscher wurden mit überschüssiger Na₂WO₄-Lösung voll beladen, das überschüssige Na₂WO₄ ausgewaschen und das gebundene WO₄²⁻- mit 10%iger NH₃-Lösung eluiert. Nur die schwach-basischen Anionenaustauscher waren vollständig eluierbar. Bei den mittel-basischen Anionenaustauschern bleibt je nach Anteil der quartären Ammoniumgruppen 10 bis 20 % der W-Beladung auf dem Anionenaustauscher. Bei den stark basischen nur quarternäre Ammoniumgruppen enthaltende Anionenaustauschern ließ sich mit NH₃-Lösung lediglich weniger als 1 % bis zu 45 % der W-Beladung eluieren. Das restliche WO₄²- war nur mit NaOH eluierbar.

Die Versuchsbedingungen des Beispiels 2 sind der nachfolgenden Tabelle zu entnehmen.

| Anionen-AT | Basizität | Lieferform | pH Beladung | NH₄-Eluat g/l W | Kapazität g W/l AT |
|---|---|---|---|---|---|
| Lewatit¹⁾ AP 49 | mittel | OH | 8 | 13,5 | 135 |
| Lewatit AP 246 | schwach | OH | 8 | 12,9 | 129 |
| Lewatit MP 62 | schwach | OH | 8,5 | 18,7 | 187 |
| Lewatit MP 64 | mittel | OH | 8,5 | 16,4 | 164 |
| Lewatit MP 500 | stark | Cl | 8,5 | 3,35 | 33,5 |
| Lewatit MP 600 | stark | Cl | 8,5 | 7,6 | 76 |
| Lewatit M 500 | stark | Cl | 8 | 0,08 | 0,8 |
| Lewatit M 504 | stark | Cl | 8 | 0,35 | 3,5 |
| Lewatit M 600 | stark | Cl | 8 | 0,145 | 1,45 |

| | | | | | |
|---|---|---|---|---|---|
| ¹⁾ Handelsprodukte der Bayer AG, Leverkusen, Deutschland | | | | | |

### Beispiel 3

Mit dem schwach-basischen Austauscher Lewatit MP 62, der gemäß Tabelle 1 die höchste mit Ammoniak-Lösung eluierbare Beladungskapazität zeigt, wurden Beladungsversuche mit verschiedenen Refraktärmetallen durchgeführt. Das Formieren des Austauschers wurde mit CO₂ bei Normaldruck vorgenommen. Beladen wurde jeweils mit gleichen Mengen, bezogen auf eine 20 g/l Natriumwolframat-Lösung, berechnet als W. Eluiert wurde mit einer 1:1 verdünnten wäßrigen NH₃-Lösung.

Die Ergebnisse sind in der nachfolgenden Tabelle 2 aufgeführt.

**Tabelle 2**

| Metall | pH | Beladung |
|---|---|---|
| W | 7 | 153,5 g W / l AT |
| Mo | 6-6,5 | 51,2 g Mo / l AT |
| Cr | 6-6,5 | 40 g Cr / l AT |
| V | 7 | 75,7 g V / l AT |
| Re | 7 | 107 g Re / l AT |

Durch CO₂-Begasung des Austauschers Lewatit MP 62 bei 10 bar im Vergleich zur CO₂-Begasung unter Normaldruck konnte die Aufnahmekapazität um 20 % gesteigert werden.

## Patentansprüche

1. Verfahren zur Herstellung reiner Ammonium-Metallate der Metalle W, Mo, V, Cr und Re, wobei alkalische Metallsalzlösungen durch Umsetzung mit CO₂ auf einen pH-Wert im Bereich von 5 bis 9 eingestellt, diese Metallsalzlösungen über einen in der Carbonat-Form vorliegenden Anionentauscher gegeben werden, wobei sich neben der Alkalicarbonat-Lösung der Ionentauscher in der Metallat-Form bildet, dann der Ionentauscher alkalifrei gewaschen und anschließend mittels wäßrigen Ammoniaks unter Bildung von Ammonium-Metallatlösungen und dem in der OH-Form vorliegenden Anionentauschen eluiert wird, wobei der Anionentauscher mittels CO₂-Behandlung in die Carbonat-Form überführt und rückgeführt wird, dadurch gekennzeichnet, daß als Anionentauscher ein fester Anionentauscher eingesetzt wird.

2. Verfahren gemäß Anspruch 1, dadurch gekennzeichnet, daß als fester Anionentauscher ein mittelbasischer Ionentauscher eingesetzt wird.

3. Verfahren gemäß Anspruch 1, dadurch gekennzeichnet, daß als fester Anionentauscher ein schwach-basischer Ionentauscher mit vorwiegend tertiären Ammoniumgruppen eingesetzt wird.

4. Verfahren gemäß einem oder mehreren der Ansprüche 1 bis 3, dadurch gekennzeichnet, daß die Umsetzung der alkalischen Metallsalzlösungen mit CO₂ bei Drücken von Normaldruck bis 50 bar, bevorzugt Normaldruck bis 10 bar, durchgeführt wird.

5. Verfahren gemäß einem oder mehreren der Ansprüche 1 bis 4, dadurch gekennzeichnet, daß das Überführen des Anionentauschers in die Carbonat-Form mittels CO₂-Wasser bei Drücken von 1 bis 10 bar durchgeführt wird.

6. Verfahren gemäß einem oder mehreren der Ansprüche 1 bis 5, dadurch gekennzeichnet, daß die Eluierung des Anionentauschers mittels wäßrigen Ammoniaks einer Konzentration von 5 bis 20 Gew.-% NH₃ zu einem Austauschgrad von mindestens 90 % durchgeführt wird.

7. Verfahren gemäß einem oder mehreren der Ansprüche 1 bis 6, dadurch gekennzeichnet, daß die Alkalicarbonatlösung aufkonzentriert und rückgeführt und beim Aufschluß von Metallrohstoffen zur Herstellung der alkalischen Metallsalzlösungen eingesetzt wird.

## Claims

1. Process for the production of pure ammonium metallates of the metals W, Mo, V, Cr and Re, wherein alkaline metal salt solutions are adjusted to a pH value in the range from 5 to 9 by reaction with CO₂, these metal salt solutions are passed through an anion exchanger in carbonate form, wherein, in addition to the alkaline metal carbonate solution, the metallate form of the ion exchanger is formed, the ion exchanger is then washed until free of alkali and is then eluted by means of aqueous ammonia to form ammonium metallate solutions and the anion exchanger in the OH form, wherein the anion exchanger is converted into the carbonate form by means of CO₂ treatment and is recycled, characterised in that the anion exchanger used is a solid anion exchanger.

2. Process according to claim 1, characterised in that a moderately basic ion exchanger is used as the solid anion exchanger.

3. Process according to claim 1, characterised in that a weakly basic ion exchanger predominantly containing tertiary ammonium groups is used as the solid anion exchanger.

4. Process according to one of more of claims 1 to 3, characterised in that the reaction of the alkaline metal salt solutions with CO₂ is performed at pressures ranging from standard pressure to 50 bar, preferably from standard pressure to 10 bar.

5. Process according to one or more of claims 1 to 4, characterised in that the anion exchanger is converted into the carbonate form by means of CO₂/water at pressures of 1 to 10 bar.

6. Process according to one or more of claims 1 to 5, characterised in that the anion exchanger is eluted by means of aqueous ammonia of a concentration of 5 to 20 wt.% NH₃ to a degree of exchange of at least 90%.

7. Process according to one of more of claims 1 to 6, characterised in that the alkali metal carbonate solution is concentrated, recycled and used for digesting metal raw materials for the production of the alkaline metal salt solutions.

## Revendications

1. Procédé pour la préparation de métallates d'ammonium purs des métaux W, Mo, V, Cr et Re, dans lequel on règle des solutions alcalines de sels métalliques à un pH dans l'intervalle de 5 à 9 par réaction avec CO₂, on envoie ces solutions de sels métalliques sur un échangeur d'anions sous la forme carbonate, ce qui donne une solution de carbonate alcalin et fait passer l'échangeur d'ions sous la forme métallate, on lave ensuite l'échangeur d'ions jusqu'à élimination des alcalis puis on élue par l'ammoniaque, ce qui donne des solutions de métallates d'ammonium et fait passer l'échangeur d'anions sous la forme OH, on remet l'échangeur d'anions sous la forme carbonate en le traitant par CO₂ et on le recycle, le procédé se caractérisant en ce que l'échangeur d'anions utilisé est un échangeur d'anions solide.

2. Procédé selon la revendication 1, caractérisé en ce que l'échangeur d'anions solide est un échangeur d'ions à basicité moyenne.

3. Procédé selon la revendication 1, caractérisé en ce que l'échangeur d'anions solide est un échangeur d'ions faiblement basique contenant principalement des groupes ammonium tertiaires.

4. Procédé selon une ou plusieurs des revendications 1 à 3, caractérisé en ce que la réaction entre les solutions alcalines de sels métalliques et CO₂ est réalisée à des pressions allant de la pression normale jusqu'à 50 bar, de préférence de la pression normale jusqu'à 10 bar.

5. Procédé selon une ou plusieurs des revendications 1 à 4, caractérisé en ce que l'on met l'échangeur d'anions sous la forme carbonate en le traitant par de l'eau contenant CO₂ à des pressions de 1 à 10 bar.

6. Procédé selon une ou plusieurs des revendications 1 à 5, caractérisé en ce que l'échangeur d'anions est élué par de l'ammoniaque à une concentration de 5 à 20 % en poids de NH₃ à un taux d'échange d'au moins 90 %.

7. Procédé selon une ou plusieurs des revendications 1 à 6, caractérisé en ce que l'on concentre la solution de carbonate alcalin et on la recycle à l'attaque des matières premières métallifères pour la préparation de solutions alcalines de sels métalliques.
